# EUROPÄISCHE PATENTSCHRIFT

(11) **EP 0 352 275 B1**
(45) Veröffentlichungstag und Bekanntmachung des Hinweises auf die Patenterteilung: **13.07.1994**
(21) Anmeldenummer: 88902355.2
(22) Anmeldetag: 23.03.1988
(51) Int. Cl.: F24J 3/00, A01C 3/02, F23B 3/00, F23G 5/40, F24J 2/34

(54) **MEDIUMSPEICHER**
RESERVOIRS FOR MEDIA
RESERVOIRS

(30) Priorität: 24.03.1987 AT 694/87
(43) Veröffentlichungstag der Anmeldung: 31.01.1990
(73) Patentinhaber: FRELLER, Walter, A-5310 Mondsee (AT)
(72) Erfinder: FRELLER, Walter, A-5310 Mondsee (AT)
(86) Internationale Anmeldenummer: AT8800014
(87) Internationale Veröffentlichungsnummer: WO8807652

(56) Entgegenhaltungen:
- EP-A- 0 136 611
- BE-A- 901 312
- DE-A- 2 711 803
- DE-A- 2 812 360
- DE-A- 3 027 085
- DE-A- 3 117 533
- FR-A- 2 522 781
- FR-A- 2 536 153
- FR-A- 2 579 312
- US-A- 4 520 795

## Beschreibung

Mediumspeicher sind Flüssigkeitsbehälter,die Wärme speichern durch die außen angebrachte Isolation und die Wärme durch angebaute Heizsysteme in das Speichermedium einbringen.

Bei Heizkesseln wird immer getrachtet,die Wärme in das Speichermedium sofort abzuleiten.Sie müssen daher mit hoher Rauchgastemperatur betrieben werden,ansonsten erlischt die Verbrennung.Es geht bei diesem Verfahren viel Wärme durch die abziehenden Rauchgase durch die Kamine verloren.Nachträgliche Rauchgasabkühlung ermöglicht nur ein Absenken der Rauchgastemperatur auf Heißwassertemperatur,es ist nicht möglich,Abgase auf Umlufttemperatur zu kühlen.

Bei Biogasanlagen wird getrachtet,die Gärmasse in einen Gärbehälter zu bringen und ihn von Zeit zu Zeit wieder zu entleeren.Dieses Verfahren bringt das Problem mit sich,daß sich die Feststoffanteile immer wieder absenken und,wenn sie nicht mechanisch ausgebracht werden,den Gärbehälter auffüllen und somit die Biogasherstellung beträchtlich einschränken.Es ist von unbedingter Notwendigkeit,diesen Wartungsaufwand ständig zu betreiben.

In der EP-A-136 611 wird mit erwärmten Abgasen gearbeitet,die zuerst das Wasser in der Heizschlange erwärmen und dort den Großteil ihrer Wärme abgeben,wobei die verbleibende Wärme in den Abgasen zur Vorwärmung der Verbrennungsluft dient.

Nicht erreicht wird,daß die Verbrennungsluft auf Verbrennungstemperatur erwärmt wird.

Deshalb besteht die Aufgabe der Erfindung darin, die Temperatur der Verbrennungsluft zu erhöhen.Diese Aufgabe wird durch die Merkmale des Patentanspruchs 1 gelöst.

Durch die Maßnahme,die Brennkammer gegenüber dem Inneren des Behälters durch ein Isolationspolster zu trennen, wird innerhalb der Brennkammer eine höhere Verbrennungstemperatur erreicht. Die Abgase aus der Brennkammer weisen daher ebenfalls eine höhere Temperatur auf,was eine verbesserte Vorwärmung der Verbrennungsluft über den Gegenstromwärmetauscher nach sich zieht.Höhere Temperaturen der Verbrennungsluft stellen wiederum höhere Verbrennungstemperaturen sicher,so daß durch diese Maßnahme eine Verbrennung erreicht werden kann, die eine schadstoffarme Verbrennung von Müll oder dgl. erlaubt.

Trotzdem bleibt die Abgastemperatur nach dem Gegenstromwärmetauscher niedrig,weil den heißen Abgasen im Gegenstromwärmetauscher die für die Vorwärmung der Verbrennungsluft erforderliche Wärmemenge entzogen wird.

In der Zeichnung ist eine Anwendungsmöglichkeit in den Fig 1 Fig 2 und Fig 3 dargestellt, diese jedoch schließen andere Anwendungsmöglichkeiten nicht aus.

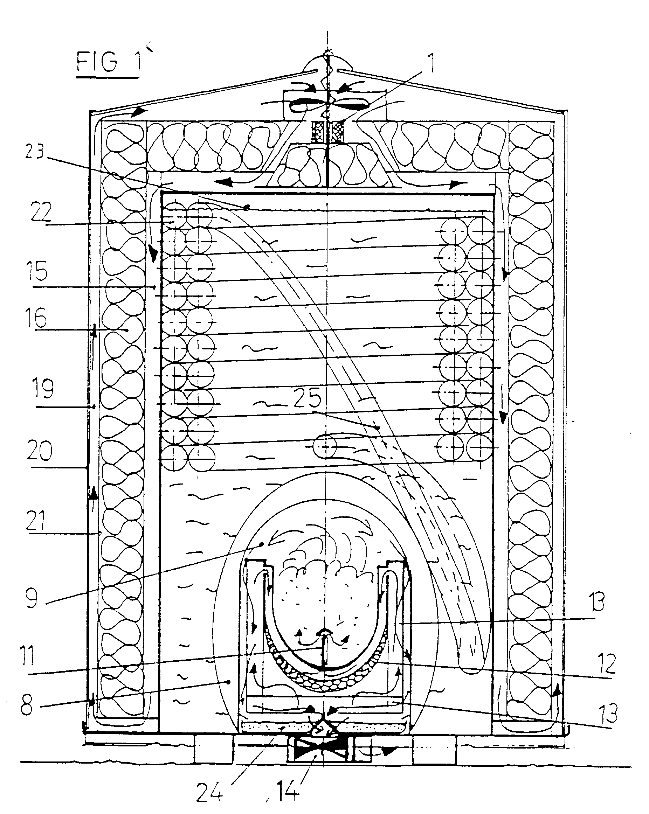

Die Fig 1 zeigt einen Längsschnitt durch den Mediumspeicher. Außen verkleidet mit der transparenten Verkleidung 20 nach einem Abstand ist er isoliert mit der Isolation 16 die mit der wärmeabsorbierenden Oberfläche 21 versehen ist. Im obren Bereich ist die Isolation 16 durch das Gebläse geöffnet.

Die Abstandslamellen 15 schaffen den Zwischenraum für die Luftzirkulation zwischen Mediumspeicher und Isolation 16. Die Schlauch- oder Rohrspiralle 22 dienlich zur Biogaserzeugung ist nach oben in Mediumspeicher 23 geführt und am Ende in einer Rohr- oder Schlauchschleife 25 nach außen vom Mediumspeicher 23 geführt. Die Brennkammer 9 hat einen Isolationspolster 8 zum Mediumspeicher 23. In von oben nach unten und quer zur Brennkammer 9 angeordneten Gegenstromwärmetauscher 13 liegt das isolierte umlenkblech 12 des Beschickungskorbes. Unterhalb des kippbaren aus- und einfahrbaren Beschickungskorbes 10 ist der Sandfilter 24 von dem die Abluft durch ein Geblase 14 abgesaugt wird.

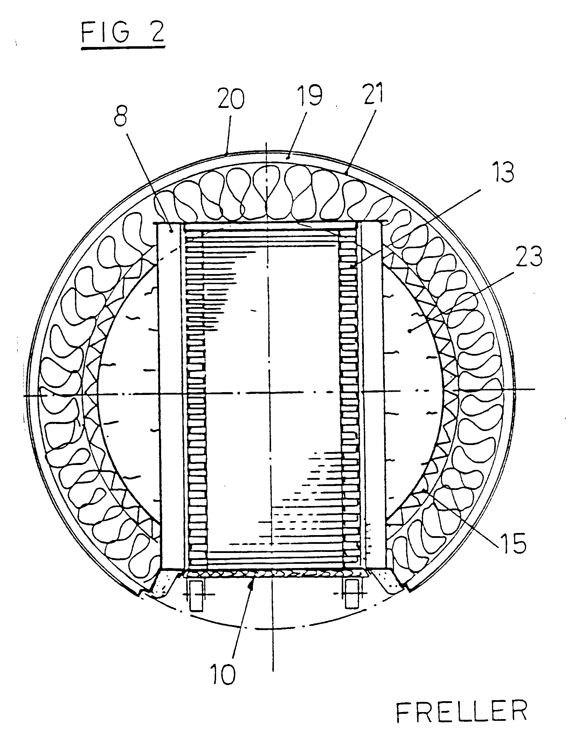

Die Fig 2 zeigt den Querschnitt des Mediumspeichers 23 im Bereich der Brennkammer 9. Die transparente Verkleidung 20 umschließt von außen nach innen Isolation 16 Abstandlamellen 15 und Mediumspeicher 23 Isolationspolster 8 Brennkammer 9 Gegenstromwärmetauscher 13 und Beschickungskorb 10.

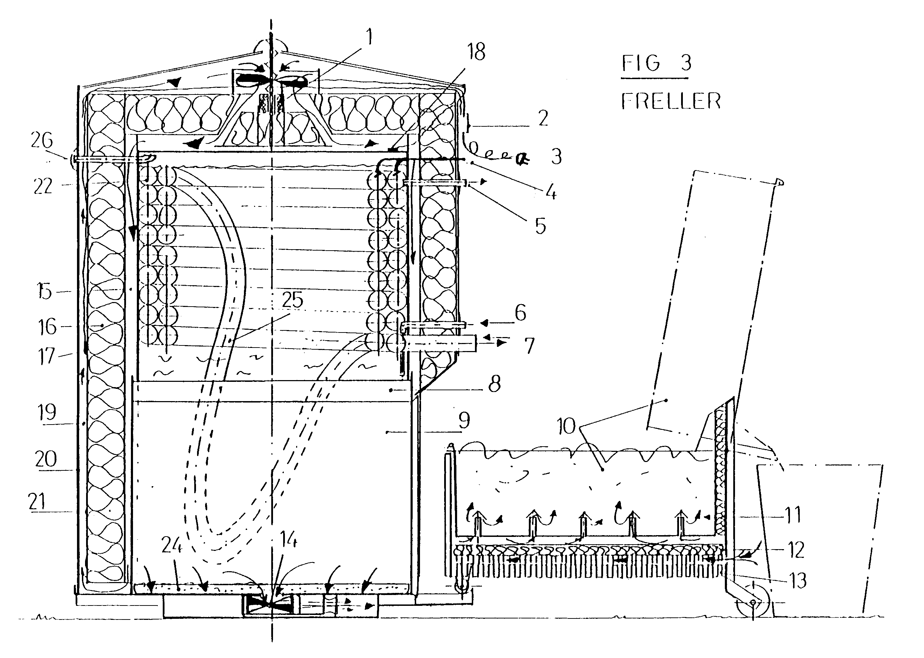

In der Fig 3 wird ein Längsschnitt durch den Mediumspeicher gezeigt, der in Langsrichtung zur Brennkammer 9 führt, wobei der Beschickungskorb 10 mit dem Gegenstromwärmetauscher 13 ausgefahren ist. (Nützlich zur Reinigung und Beladung) Er hat frontseitig die Zu- und Ableitung von Abwasseranschlüssen 7, Frischwasseranschlüssen 5 und 6, Biogasableitung 4, Stromanschluß 3, Regelgerät 2 mit den zwei Thermofühlern 17 und 18, den Rohr- Schlauchspiralle 22, der Schlauch oder Rohrschleife 25, Isolationspolster 8, Brennkammer 9 Sandfilter 24, Gebläse 14 ausfahrbaren und kippbaren Beschickungskorb 10 mit den Düsen 11. Umlenkblech 12 und Gegenstromwärmetauscher 13. Belüftungsöffnung 26 dienlich zum Druckausgleich und Entschwefelung oder Entgasung von Frischwasser.

## Patentansprüche

1. Wärmespeicher mit einem nach außen wärmeisolierten Behälter (23) für einen flüssigen Wärmeträger,der über eine Brennkammer (9) mit einem Abgasgebläse (14) erwärmbar ist, dadurch gekennzeichnet, daß die Brennkammer (9) gegenüber dem Wärmeträger des Behälters (23) durch ein Isolationspolster (8) getrennt ist und einen Gegenstromwärmetauscher (13) für die Vorwärmung der der Brennkammer zugeführten Verbrennungsluft mittels der heißen Abgase aus der Brennkammer (9) enthält,daß der Behälter (23) eine der Sonnenbestrahlung aussetzbare,die Behälterisolation (16) umschließende Verkleidung (20) aufweist,daß einerseits zwischen der Verkleidung (20) und der Behälterisolation (16) und anderseits zwischen der Behälterisolation (16) und dem Behälter (23) Strömungskanäle(19)für einen über ein Gebläse geführten,geschlossenen Kreislauf eines gasförmigen Wärmeträgers ausgebildet sind,daß im oberen Teil des Behälters (23) eine Rohr- oder Schlauchleitung (22) aus mehreren übereinanderliegend angeordneten Windungen verläuft, die an einen Zu- und Ablauf (7) für eine flüssige Biomasse und an eine Biogasableitung (4) angeschlossen ist,daß der zum Ablauf (7) für die Biomasse führende Rohr-oder Schlauchleitungsabschnitt (25) eine nach unten durchhängende Schlinge bildet,daß die Brennkammer (9) einen ein-und ausfahrbaren Beschickungskorb (10) aufweist,der den den Korbboden untergreifenden Gegenstromwärmetauscher (13) an seinen Seitenwänden trägt und daß unterhalb des Beschickungskorbes (10) vor dem Absaugegebläse ein Sandfilter (24) angeordnet ist.

2. Wärmespeicher nach Anspruch 1, dadurch gekennzeichnet,daß im Beschickungskorb (10) eine Antriebsmaschine für einen Generator angeordnet ist.

## Claims

1. A heat storage means, comprising a tank (23) thermally insulated from the exterior and intended for a liquid heat vehicle heatable via a combustion chamber (9) by means of a flue gas fan (14), characterised in that the combustion chamber (9) is separated from the heat vehicle of the tank (23) by an insulation cushion (8) and contains a counter-current heat-exchanger (13) for preheating by means of the hot flue gases from the combustion chamber (9) the air for combustion fed to the latter, in that the tank (23) comprises a panelling (20) adapted to be exposed to solar radiation and enclosing the tank insulation (16), in that flow ducts (19) are formed, on the one hand, between the panelling (20) and the tank insulation (16) and, on the other hand, between the tank insulation (16) and the tank (23), said flow ducts being intended for a closed gaseous heat vehicle circuit extending via a fan, in that a pipeline or hose (22) consisting of a number of superposed turns extends in the top part of the tank (23) and is connected to a supply and discharge (7) for a liquid biomass and to a biogas exhaust pipe (4), in that the pipeline or hose section (25) leading to the discharge (7) for the biomass forms a downwardly hanging loop, in that the combustion chamber (9) comprises an introducible and withdrawable charging cage (10), the side walls of which carry the counter-current heat-exchanger (13) engaging beneath the base of the cage, and in that a sand filter (24) is disposed beneath the charging cage (10) upstream of the suction-extraction fan.

2. A heat storage means according to claim 1, characterised in that a prime mover for a generator is disposed in the charging cage (10).

## Revendications

1. Accumulateur de chaleur, avec un récipient (23), isolé de la chaleur en direction de l'extérieur et destiné à un caloporteur liquide, pouvant être chauffé par l'intermédiaire d'une chambre de combustion (9), avec une soufflante à gaz d'échappement (14),
caractérisé en ce que la chambre de combustion (9) est séparée du caloporteur du récipient (23) au moyen d'un rembourrage d'isolation (8) et contient un échangeur de chaleur à contre-courant (13) pour le préchauffage de l'air comburant délivré à la chambre de combustion, au moyen des gaz d'échappement chauds sortant de la chambre de combustion (9), en ce que le récipient (23) présente un habillage (20) pouvant être exposé au rayonnement solaire et entourant l'isolation (16) du récipient, en ce que, d'une part, entre l'habillage (20) et l'isolation (16) du récipient et, d'autre part, entre l'isolation (16) du récipient et le récipient (23), sont réalisés des canaux d'écoulement (19) pour un circuit fermé, passant par une soufflante, d'un caloporteur gazeux, et en ce que dans le partie supérieure du récipient (23) passe une conduite (22) constituée d'une tuyauterie ou d'un tuyau, composée de plusieurs spires superposées, raccordée à une amenée et à une évacuation (7) d'une biomasse liquide et à une conduite d'évacuation de biogaz (4), en ce que le tronçon (25) de la conduite constituée d'une tuyauterie ou d'un tuyau et menant à l'évacuation (7) de la biomasse forme une boucle pendant vers le bas, en ce que la chambre de combustion (9) présente un panier de chargement (10) pouvant être introduit et sorti, portant l'échangeur de chaleur à contre-courant (13) enchâssant par le dessous le fond de panier et en ce qu'un filtre à sable (24) est disposeé au-dessous du panier de chargement (10), en amont de la soufflante d'évacuation.

2. Accumulateur de chaleur selon la revendication 1, caractérisé en ce qu'une machine d'entraînement pour un générateur est disposée dans un panier de chargement (10).
